# EUROPEAN PATENT APPLICATION

(11) **EP 2 692 641 A2**
(43) Date of publication of application: **05.02.2014**
(21) Application number: 13178840.8
(22) Date of filing: 31.07.2013
(51) Int. Cl.: B64D 15/12

(54) **Aircraft electrical mat with solderless lead line connections**

(30) Priority: 31.07.2012 US 201261678025 P; 19.02.2013 US 201361766264 P
(71) Applicant: Goodrich Corporation, Charlotte, North Carolina 28217-4578 (US)
(72) Inventor: Miller, Lindsay Kathryn, Cuyahoga falls, OH Ohio 44221 (US); Carpino II, Richard Joseph, Canton, OH Ohio 44721 (US)
(74) Representative: Leckey, David Herbert

(57) **Abstract**

An electrical mat (20) is adapted for coupling to lead lines (30). The electrical mat (20) comprises a plurality of layers (41-48), a heater element (50), and a window (60) aligned with a connection face on a heater bus (52). A fastener part (71) extends through each window (60) so as to allow mechanical attachment of a terminal (32) and establish an electrical connection between the lead line (30) and a heater bus (52).

## Description

### BACKGROUND

An aircraft will usually have one or more surfaces vulnerable to ice accumulation and thus equipped with some type of ice protection system. With an electrothermal system, an ice protection mat is installed on the relevant aircraft surface. The mat typically comprises a heater comprising at least one electrically conductive path and a bus electrically connected to the conductive path. The bus is electrically connected via lead lines to a power source onboard the aircraft.

### SUMMARY

An electrical mat is provided wherein the heater's busses can be electrically connected to lead lines with simple and standard fastening tools. The electrical connections to the aircraft onboard power source can be made without heat application in the vicinity of the busses, without post-lamination material removal steps, and/or and without requiring special worker skills, such as soldering.

### DRAWINGS

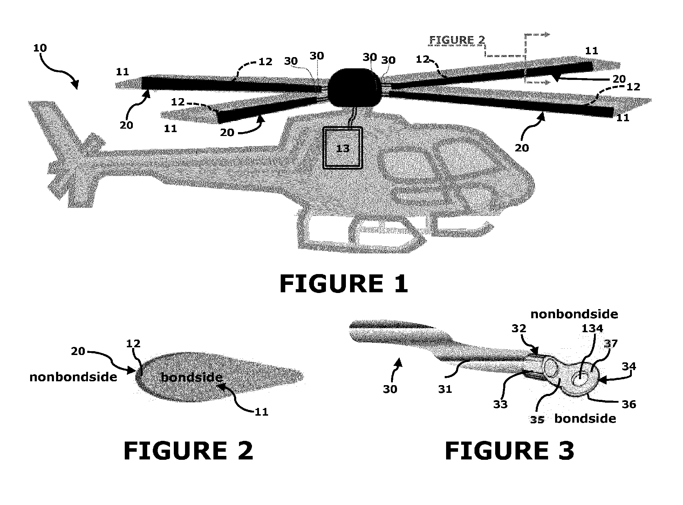

Figures 1-3 show an aircraft with electrical mats installed on some of its ice-vulnerable surfaces, a cross section of an ice-vulnerable surface, and a lead line for electrical connection of the mat to an onboard power source.

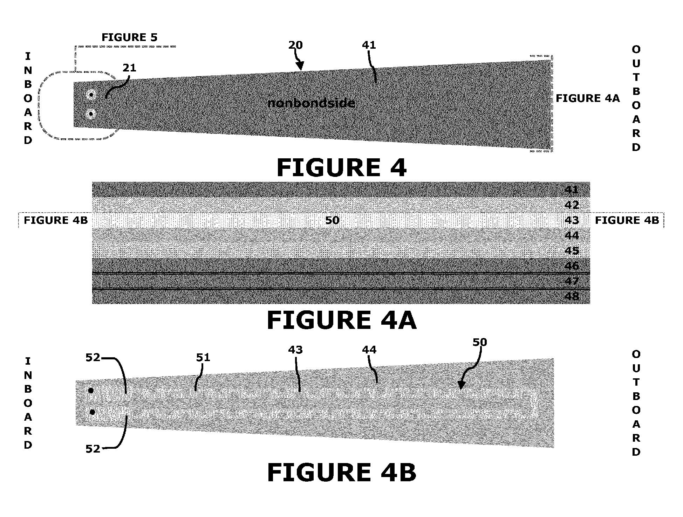

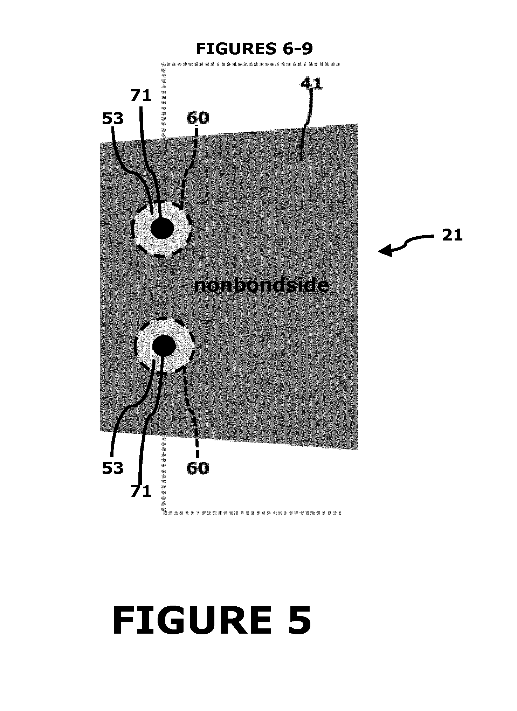

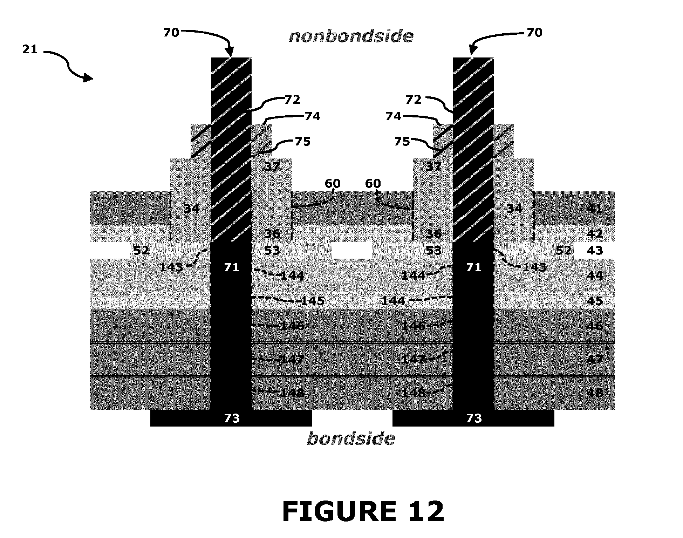

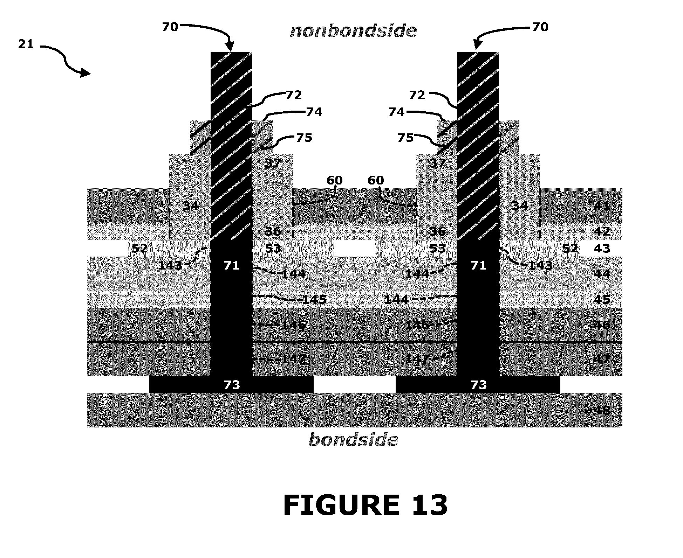

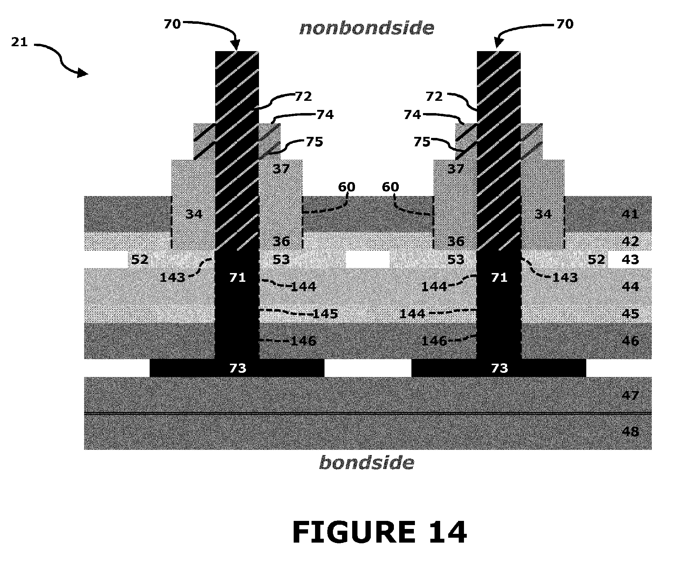

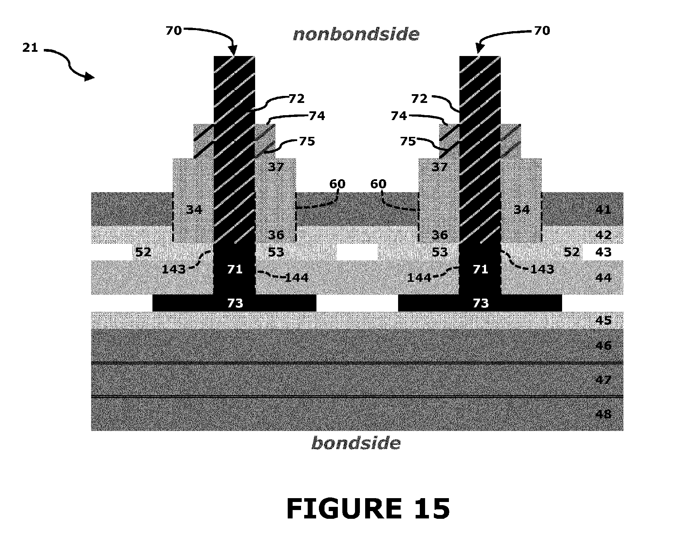

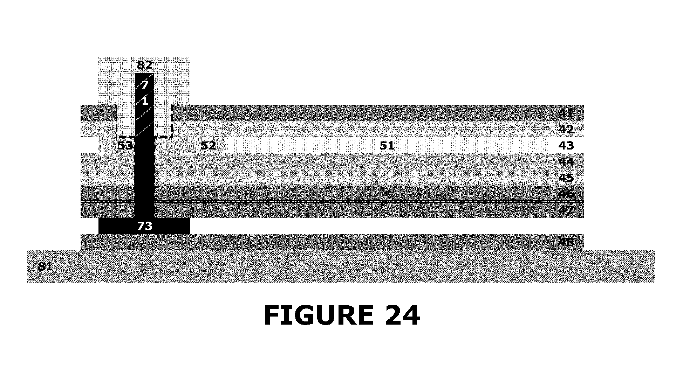

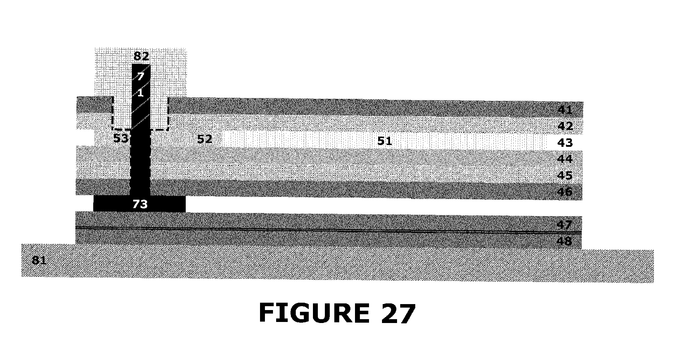

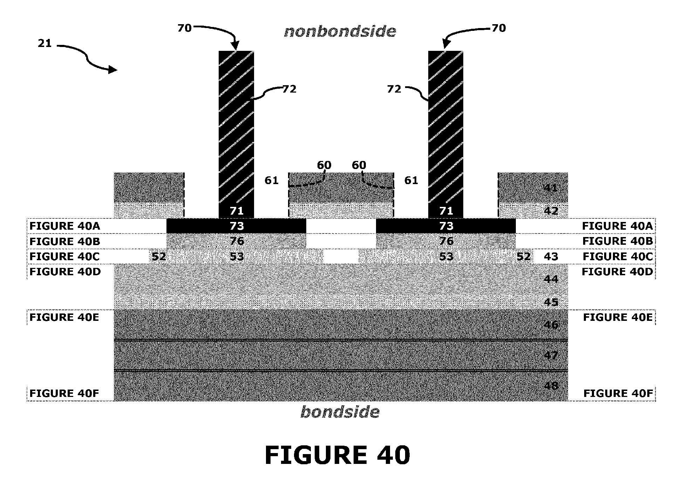

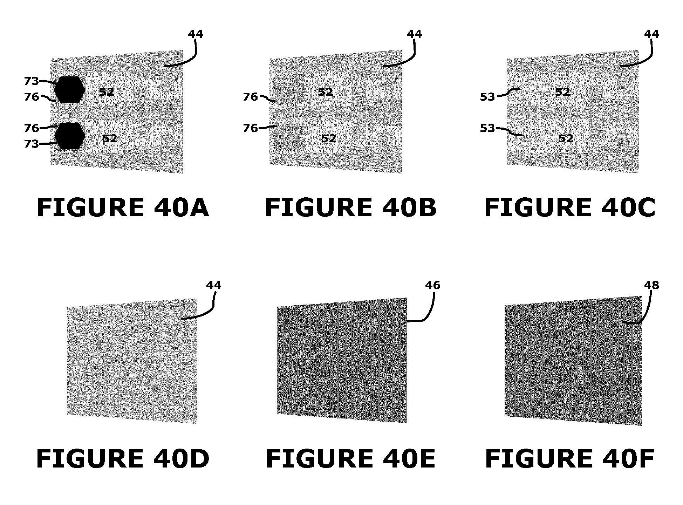

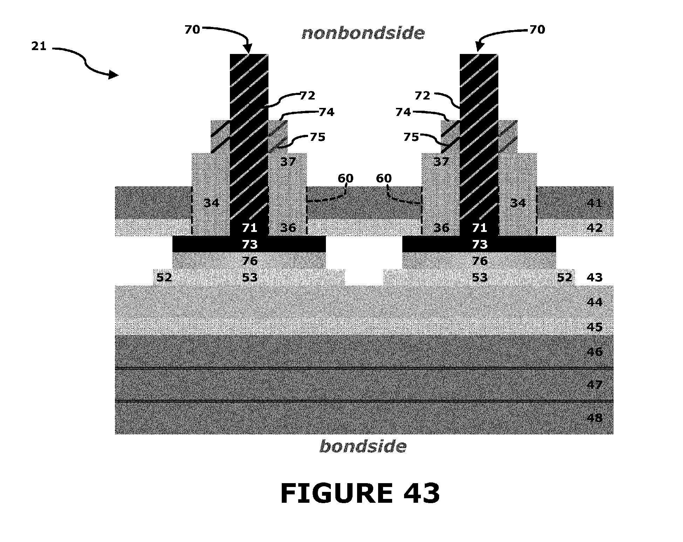

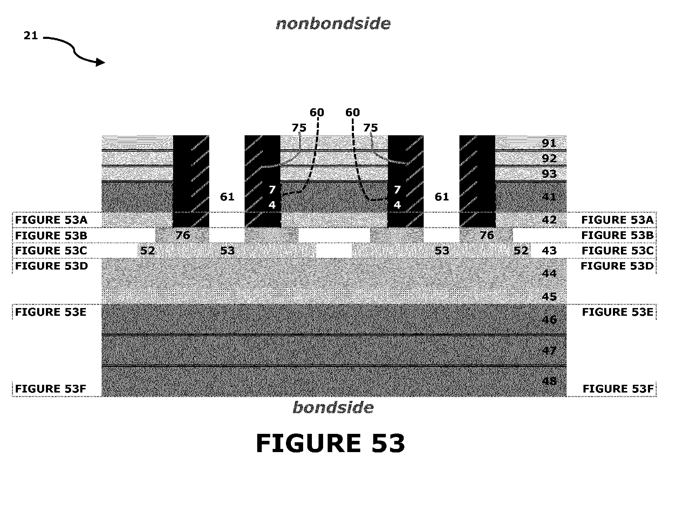

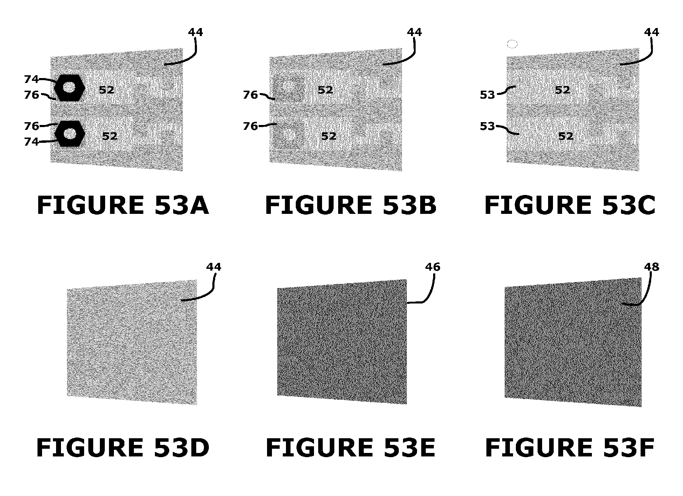

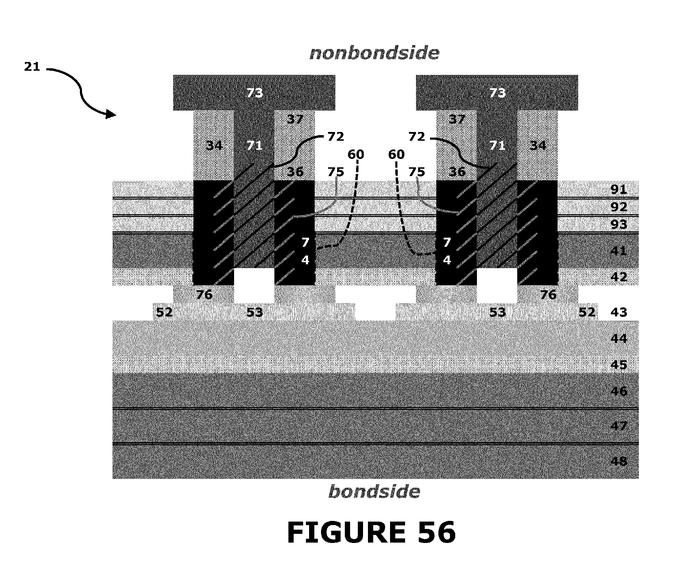

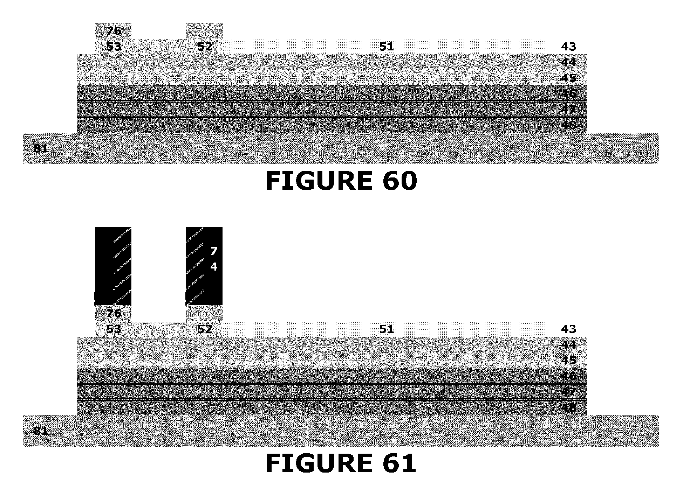

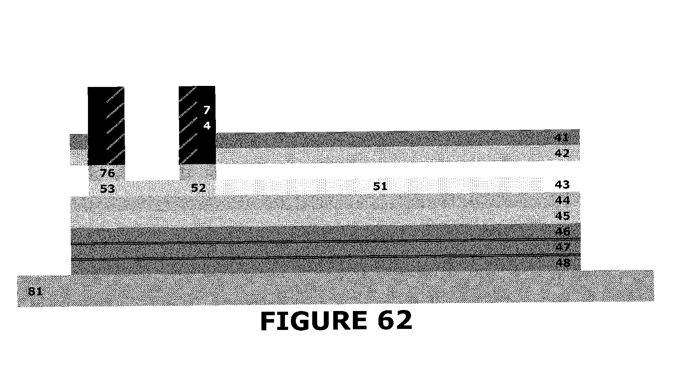

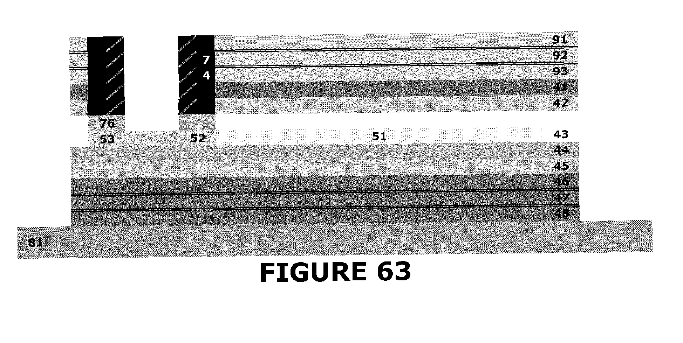

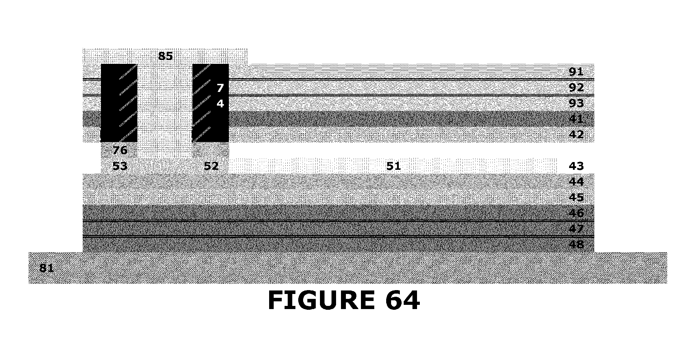

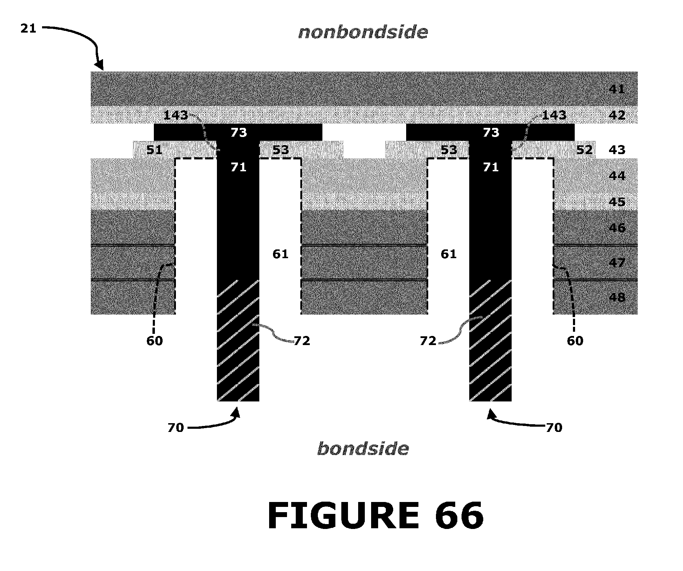

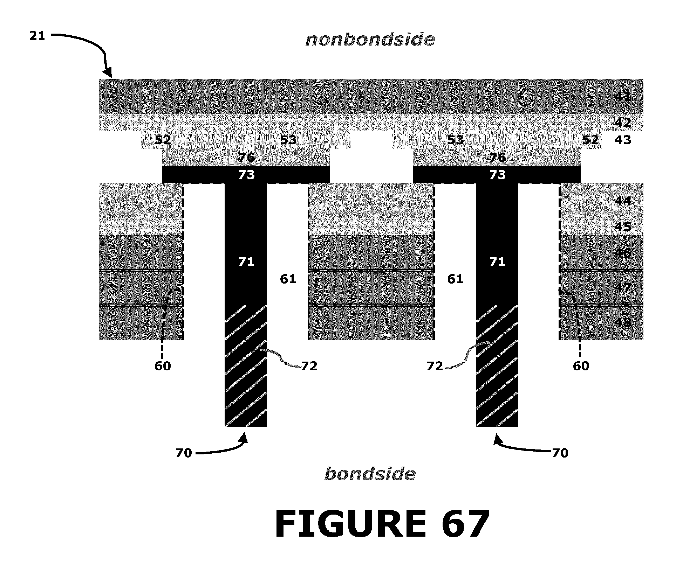

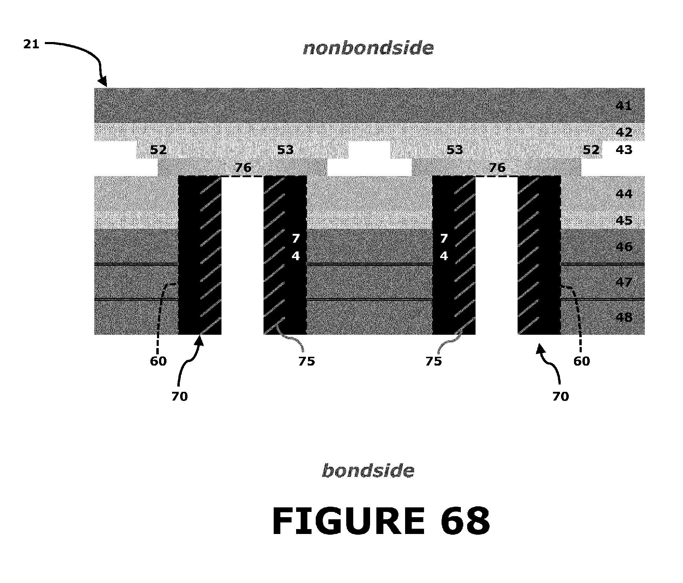

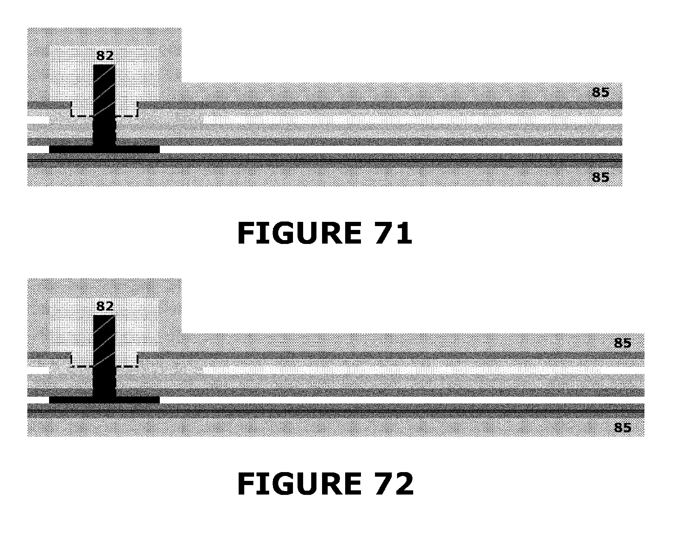

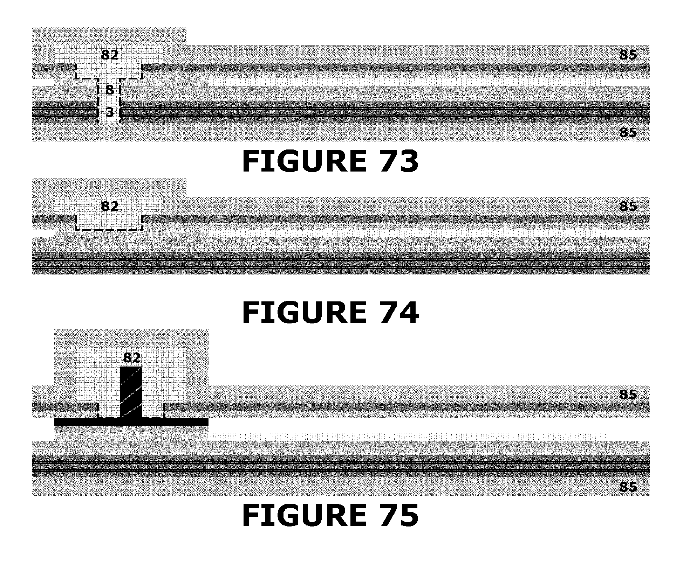

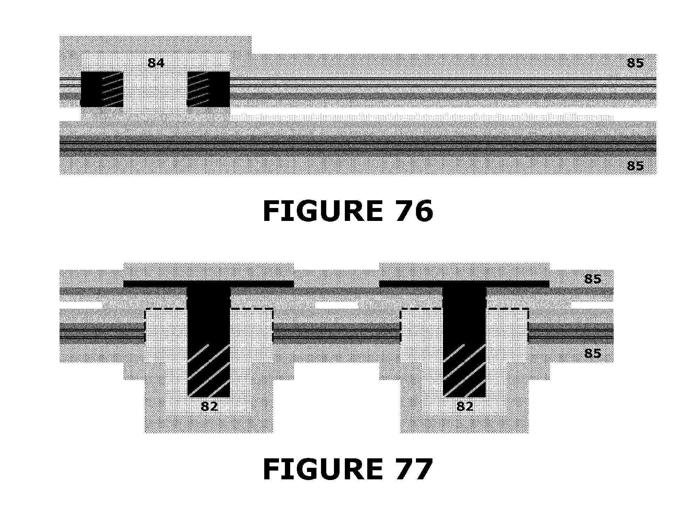

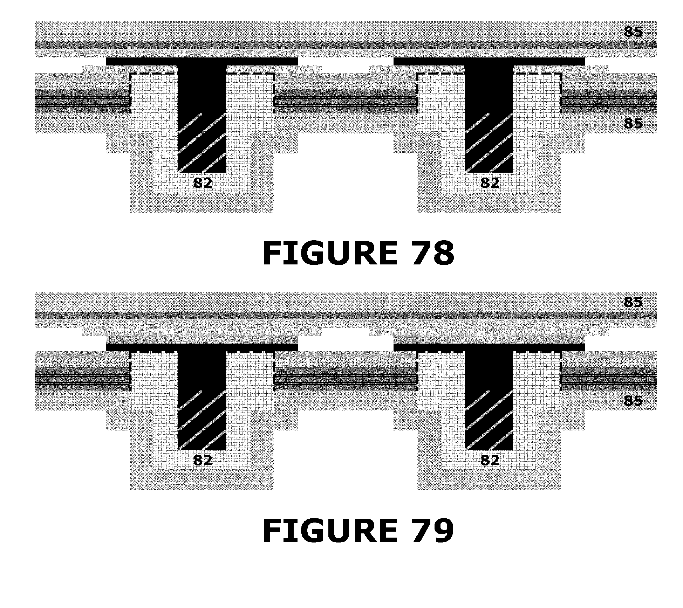

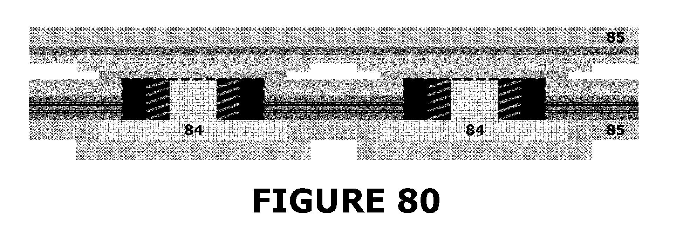

Figures 4-80, and the figures associated therewith by alphabetic suffixes, show various views of the electrical mat, some possible embodiments for its inboard region, and method steps for making the same. For ease in illustration, the mats and inboard regions are shown in a flattened form, although they will often conform to an airfoil shape such as shown Figure 2. Also, for ease-in-illustration reasons, layer thicknesses and fastener dimensions are greatly exaggerated, and probably not sized to scale. Further, laminates and composites are sometimes shown with significant empty pockets or spaces between adjacent layers and elements, but this would not really be the case as the thinness of the elements and/or the tight spacing of the layers would preclude any noticeable voids thereamong.

### DESCRIPTION

Referring now to the drawings, and initially to Figures 1-3, an aircraft 10 has components 11 with surfaces 12 which are vulnerable to ice accumulation. An electrical mat 20 is installed on each of the aircraft surfaces 12 and electrically connected to an onboard power source 13 via lead lines 30. Each lead line 30 can comprise, for example, a wire 31 with a standard ring terminal 32 coupled thereto. The terminal 32 has a crimp 33 crimped to the wire 31, a podium 34, and a ramp 35 attaching the crimp 33 to the podium 34. The podium 34 has a bondside connection face 36, a nonbondside face 37, and a central opening (i.e., a stem-receiving opening 134 introduced below) extending therethrough.

Referring to Figure 4, the electrical mat 20 can comprise a plurality of layers 41-48. In the illustrated electrical mat 20, these layers include a nonbondside layer 41, an adhesive layer 42, a heater layer 43, a heater-support layer 44, another adhesive layer 45, and bondside layers 46-48. The electrical mat 20 can instead have fewer, more, and/or different layers, depending upon its intended application, design, fabrication, and/or other factors.

The nonbondside layer 41 can comprise a thermoset polymer sheet (e.g., an epoxy polymer) having reinforcing fibers (e.g., fiberglass) embedded therein. Or it can comprise a metal sheet (e.g., stainless steel). In either or any event, the nonbondside layer 41 will preferably have a high coefficient of thermal transfer to encourage heat flow in the nonbondside direction. Also, if this layer 41 is exposed to the environment and ice will accumulate thereon, it may also be called upon to function as an erosion shield and moisture barrier.

The adhesive layer 42 serves, in the illustrated embodiment, as an insulating layer around the heater layer 43, whereby it has dielectric qualities. The layer 42 can comprise, for example, a thermoset polymer adhesive (e.g., modified epoxy) with reinforcing fibers embedded therein. In addition to serving as an electric insulator, the adhesive layer 42 also insures a strong and secure bonding of the layers 41 and 43. The layer 43 can have thermal transfer properties akin to that of the nonbondside layer 41. However, the relative height of the adhesive layer 42 may be such that its thermal-transfer properties are dwarfed by those of the nonbondside sheet 41 and/or the bondside layers 46-48.

The heater layer 43 comprises a heater element 50 having at least one electrically conductive path 51 with electrical resistance characteristics corresponding to a desired power output for ice protection purposes. A bus 52 is electrically connected to each end of the conductive path 51 so as to supply electrical power thereto and return it therefrom. The busses 52 can each comprise, for example, a thin sheet of metal (e.g., copper, gold, silver, etc) or other conductive material. Busses are typically located on an inboard region and they usually have a relatively low resistance relative to their connected-to conductive path 51.

The heater-support layer 44 can comprise any dielectric material suitable for subassembly of the heater element 50, if the conductive paths 51 are etched, printed, laid, or otherwise subassembled on the heater-support layer 44 prior to layer lamination. If the bus-connected path 51 resides on a subassembled heater support layer 44, the busses 52 can also reside thereon and/or be subassembled therewith. If the heater element 50 instead depends upon a conductive sheet or fabric for its conductive paths 51, a heater-support layer 44 may not be necessary and/or the busses 52 may be integral with the heater element 50.

The adhesive layer 45 can comprise a thermosetting polymer adhesive (e.g., modified epoxy) having the primary role to insure strong and secure bonding of the layers 43-44 to layer 46. It can preferably have electric insulation and/or thermal transfer properties akin to that of the bondside layers 46-48. But again, the thinness of the adhesive layer 45 relative to the bondside layers 46-48 may moot such properties.

The bondside layers 46-48 can each comprise a thermoset polymer sheet (e.g., an epoxy polymer) having reinforcing fibers (e.g., fiberglass) embedded therein. The layer 46 serves as an electric insulating layer around the heater layer 43, whereby at least it should have dielectric qualities. In contrast to the nonbondside layer 41, the bondside layers 46-48 preferably have a low coefficient of thermal transfer to discourage heat flow in the bondside direction. This can be accomplished, for example, by the layers 46-48 being made of less thermally-transferring material and/or by using multiple bondside layers.

As is explained in more detail below, the electrical mat 20 is preferably made by compiling the layers 41-48 and then curing this compilation to create a composite or laminate. Accordingly, the nonbondside layer 41, the heater-support layer 44 and the bondside layers 46-48 can each begin as prepreg layer with a matrix polymer that is crosslinked during curing. The adhesive layers 42 and 45 can each begin as film capable of withstanding the prepregs' curing conditions.

The inboard region 21 of the electrical mat 20 depicted in Figure 4 (shown enlarged in Figure 5) can have a cross-sectional construction as illustrated in any of Figures 6-9. In these constructions, each bus 52 includes a connection face 53 for electrical connection to the connection face 36 of the lead line's terminal 32. The term "connection face" refers to a site on the topology of a bus 52, rather than a distinct segment or part. In most cases, there will be no structural distinction between the face 53 and the rest of the bus 52, other than the location of this site.

A window 60 is associated with each bus 52 and aligned with its connection face 53. Each window 60 reaches through the thickness of the nonbondside layer 41 and any other layer (e.g., the adhesive film layer 42) located nonbondside of the heater layer 43. As is explained in more detail below, the window 60 preferably exists prior to layer lamination, to avoid post-lamination steps involving material removal near the busses 52.

A fastener 70 is adapted to mechanically attach the lead line 30 to the electrical mat 20 in such a manner that its connection face 36 is electrically connected to the bus's connection face 53. The fastener 70 has stem 71 which extends through the window 60 and has external threads 72. The cross-sectional size of the stem 71 is such there is a generous gap 61 between it and window-defining edges. If the window 60 is circular, for example, the gap 61 will have annulus-like shape.

The fastener 70 can have a head 73 on the bondside end of its stem 73. The head 73 is intended to sit substantially flush against one of the layers 40, whereby can preferably be made as thin as possible (e.g., less than 1.0mm, less than 0.5mm, and/or less than 0.35mm). Additionally or alternatively, the head 73 can have polygonal shape (e.g., hexagonal) so as to not encourage rotation relative to adjacent layers.

The fastener stem 71 preferably has a standard construction while the fastener head 73 optimally has a much thinner than standard construction. Accordingly, one option for fastener fabrication is to modify the head of a standard fastener, filing it down to the desired thickness. In the embodiments illustrated in Figures 4-10, the fastener 70 can comprise an off-the-shelf screw, a modified off-the-shelf screw, or a custom-machined component.

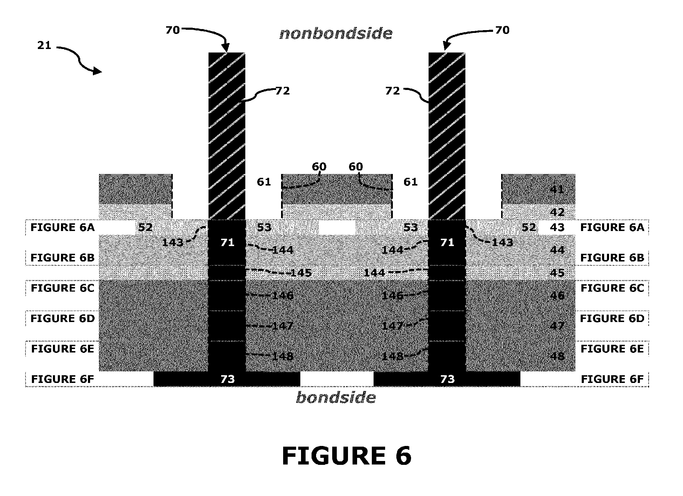

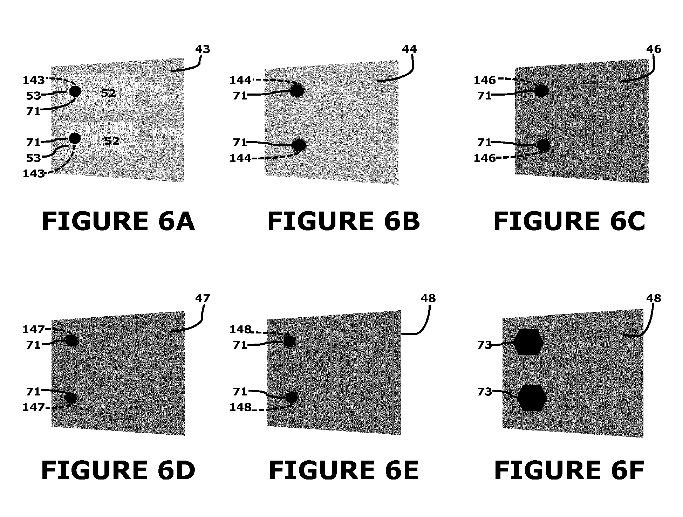

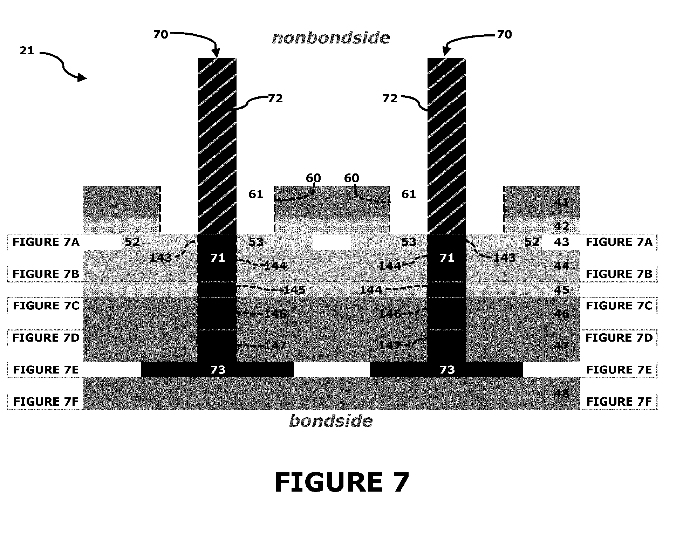

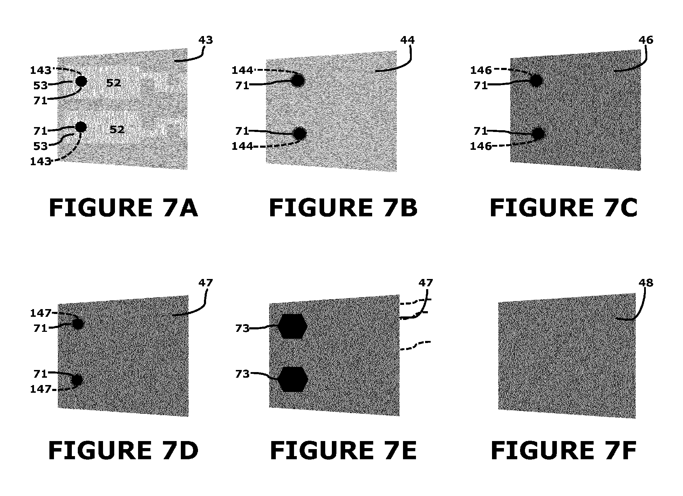

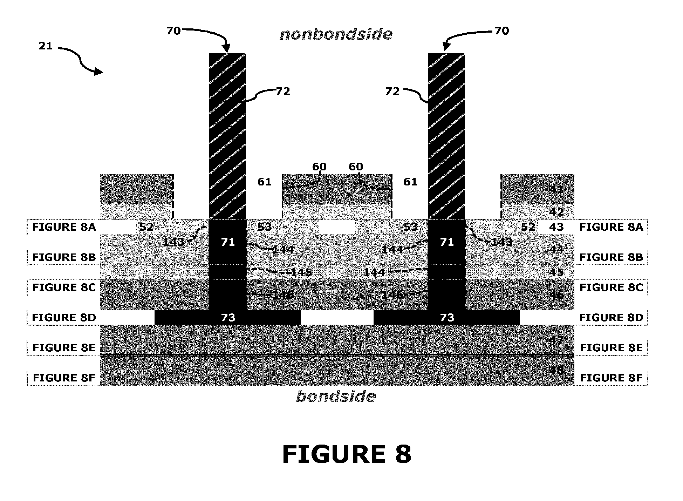

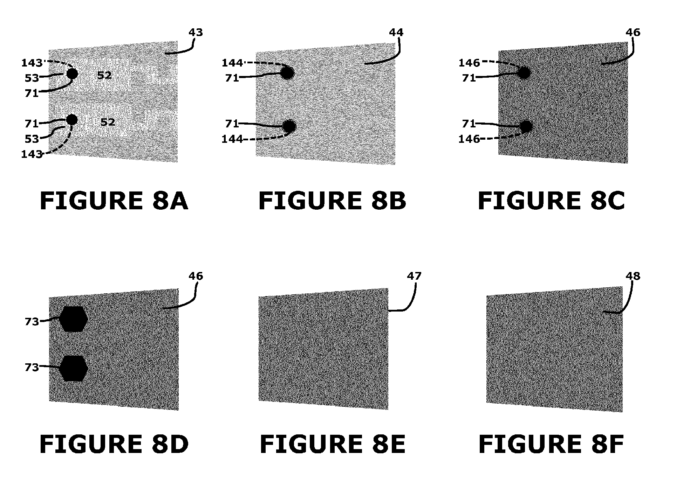

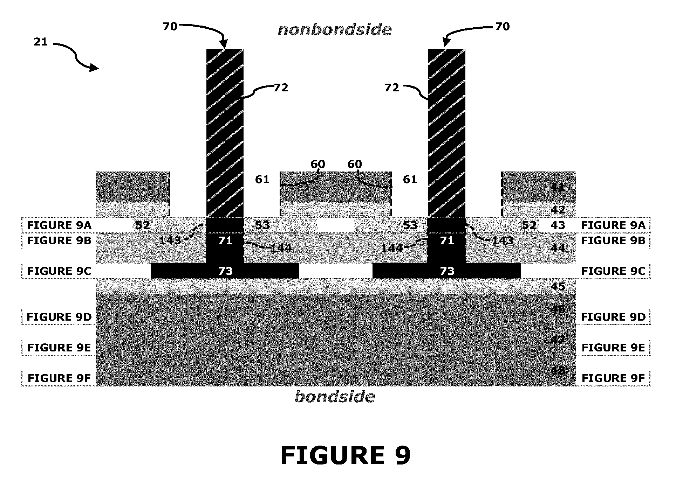

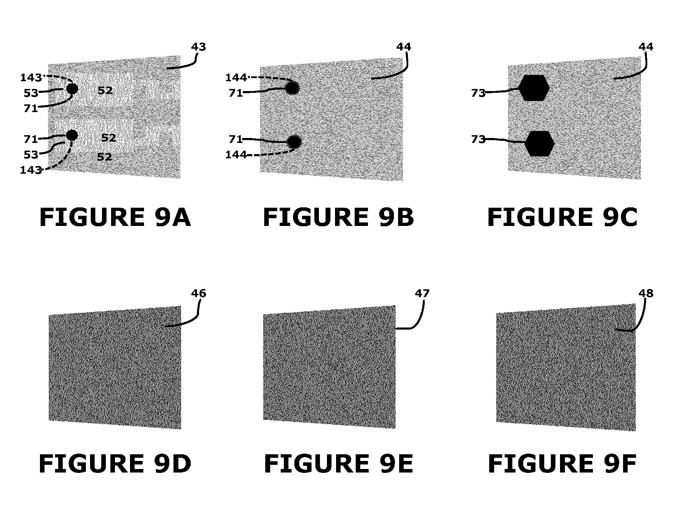

In the inboard region 21 shown in Figure 6, the fastener heads 73 are situated bondside of the layer 48. The layers 43-48 have stem-receiving openings 143-148 aligned with each window 60, with the opening 143 being located centrally within the connection face 53 of the corresponding bus 52. The stem 71 of each fastener 70 extends, in the nonbondside direction, through the aligned window 60 and through the aligned fastener-receiving openings 143-148. In the inboard region 21 shown in Figure 7, the fastener heads 73 are situated bondside of the layer 47, and the fastener stems 71 extend through windows 60 and then through stem-receiving openings 143-147. In the inboard region 21 shown in Figure 8, the heads 73 are situated bondside of the layer 46 and the stems 71 extend through windows 60 and through openings 143-146. And in the inboard region 21 shown in Figure 9, the heads 73 are situated bondside of the heater support layer 44, and the stems 71 extend through the windows 60 and through openings 144.

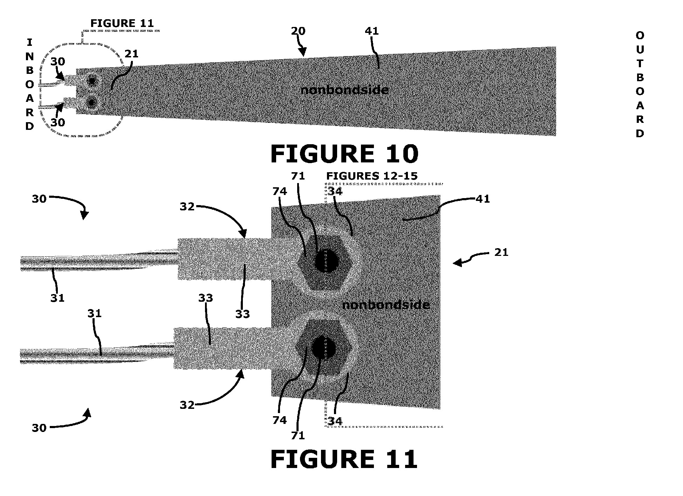

The lead lines 30 are shown electrically connected to the inboard regions 21 in Figures 10-15. The lead lines 30 are electrically connected via a standard nut 74 having interior threads 75. The nuts 74 can be off-the-shelf items and they can be tightened onto the fastener's stem 71 with a standard tool (e.g., a wrench). Thus, electrical connection can be accomplished with standard tools which do not require special skills and/or which consistently perform regardless of worker experience. And heat application on or near the busses 52 is not required, thereby eliminating the risk of thermal damage thereto

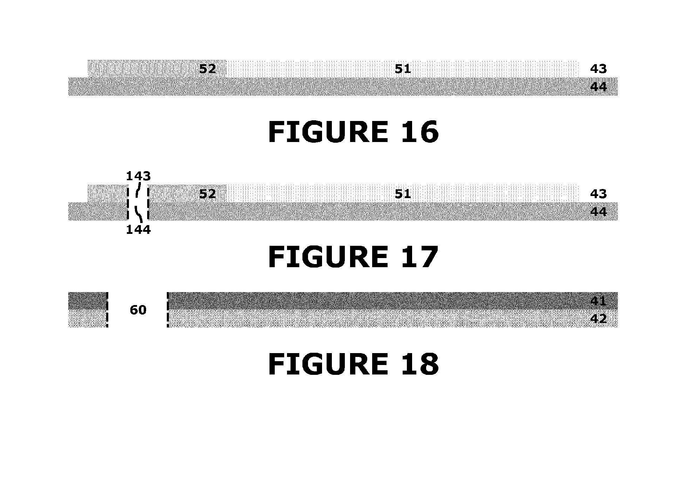

Some method steps for making the electrical mat 20 are shown schematically in Figures 16-37. Specifically, for example, the heater layer 43 can be subassembled on the support layer 44 so that the conductive path 51 and the busses 52 reside thereon (Figure 16). Stem-receiving openings 143-144 can be produced on the subassembled heater layers 43-44 (Figure 17). And the windows 60 can created on the layers 41-42 nonbondside of the heater layer 43 (Figure 18).

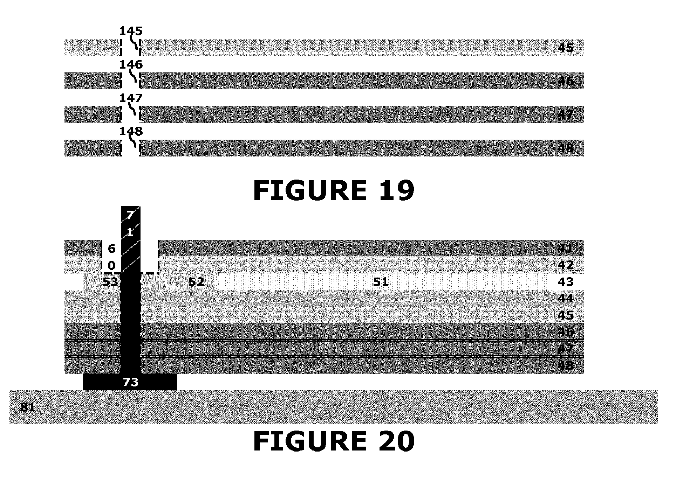

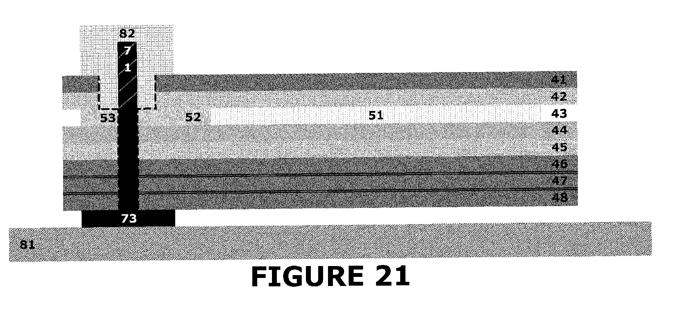

For the inboard region 21 shown in Figure 6, the stem-receiving openings 145-148 are produced in the layers 45-48 (Figure 19), the layers 41-48 are compiled on a build metal 81 with the fastener head 73 positioned below bondside layers 48 (Figure 20). A plug 82 is preferably inserted into the window 60 so as to preserve its dimensions (Figure 21). The laminate can then be vacuum bagged and cured in a conventional manner. Although not specifically shown in the drawings, the laminate may be sandwiched between peel plies and/or release plies.

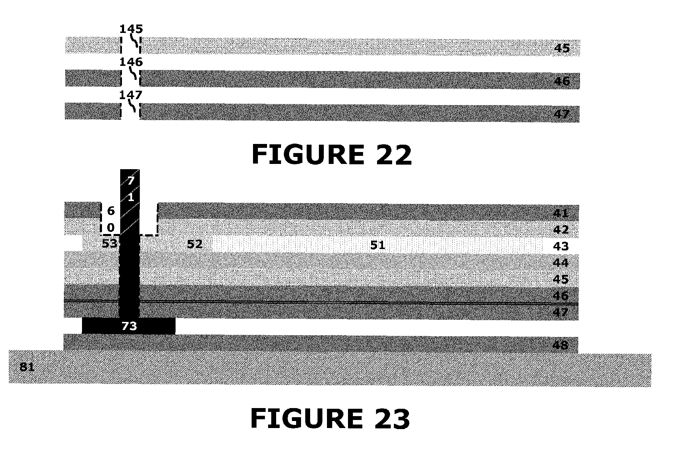

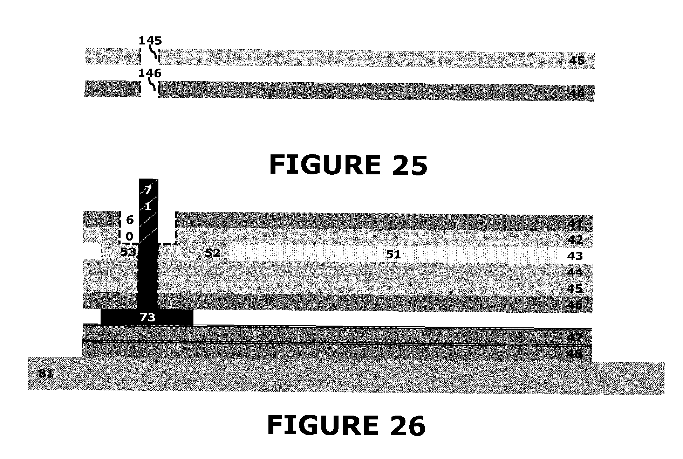

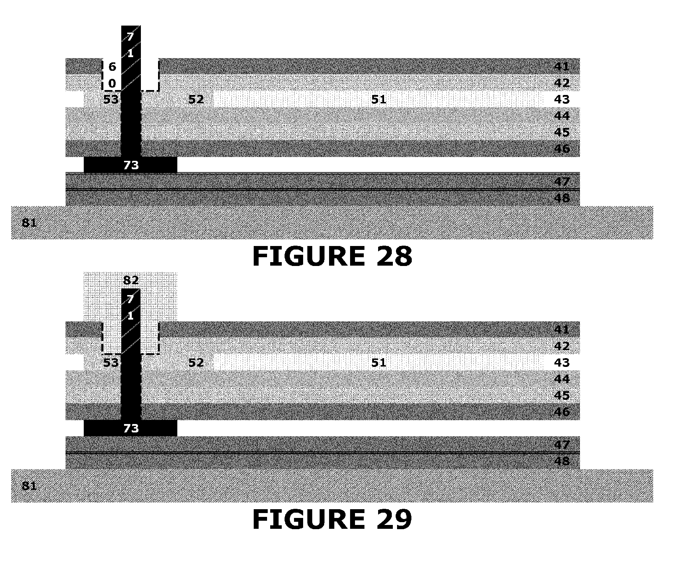

A similar approach is followed for the inboard region 21 shown in Figure 7 (Figures 22-24) and the inboard region 21 shown in Figure 8 (Figures 25-27). For the inboard region 21 shown in Figure 9 (Figures 28-29), opening-producing steps for layers bondside of the heater support layer 44 are not necessary.

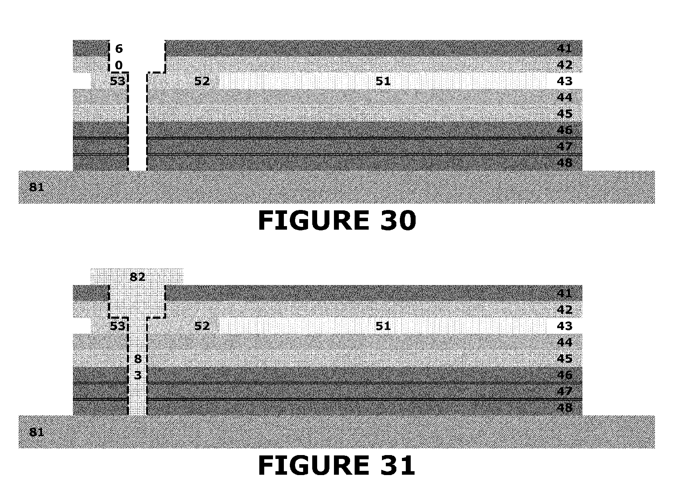

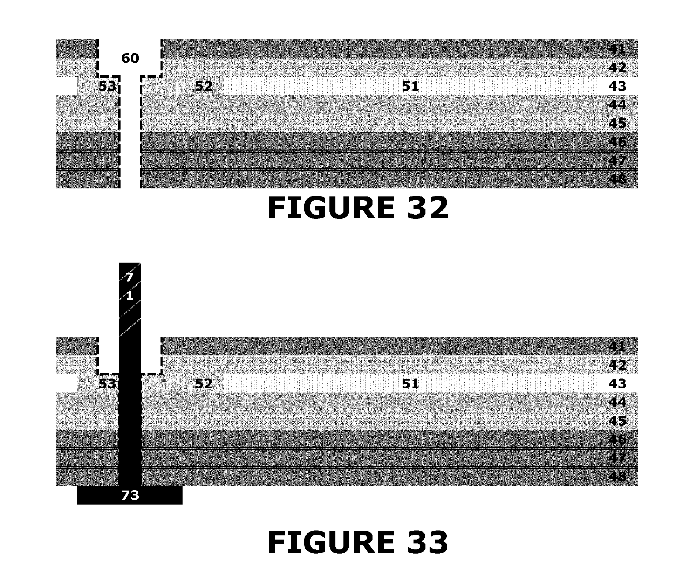

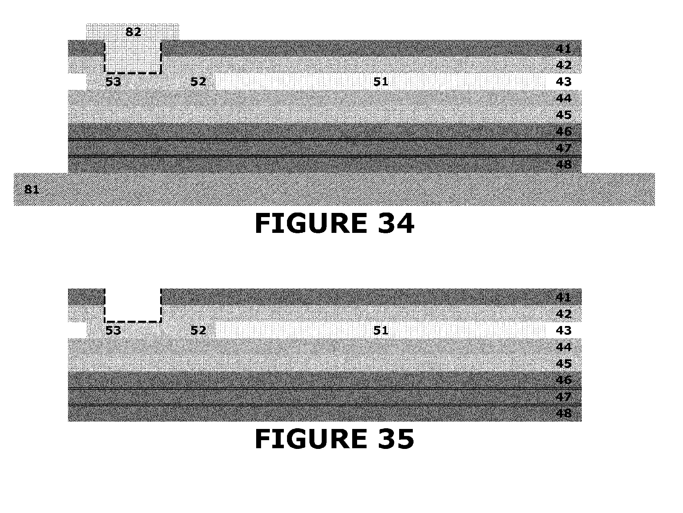

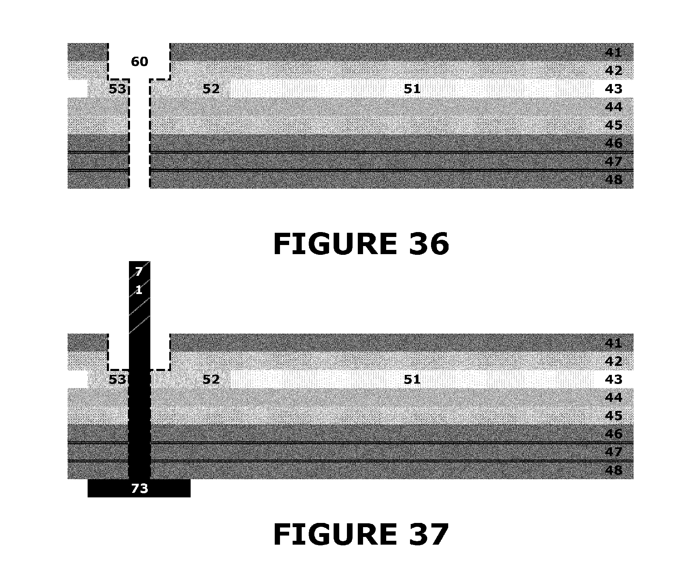

For the inboard region 21 shown in Figure 6, the layers 41-48 can instead be compiled on the build metal 81 without the fasteners 70 (Figure 30), the stem-receiving openings 145-148 filled with a plug 83 (Figure 31), and the fasteners 70 inserted after curing and removal of the plugs 82-83 (Figure 32-33). Alternatively, the layers 41-48 can be compiled on the build metal 81 and cured without openings 145-148 (Figure 34), the stem-receiving openings 145-148 produced in a post-curing step (Figure 35, and the fasteners 70 then inserted therethrough (Figure 36-37).

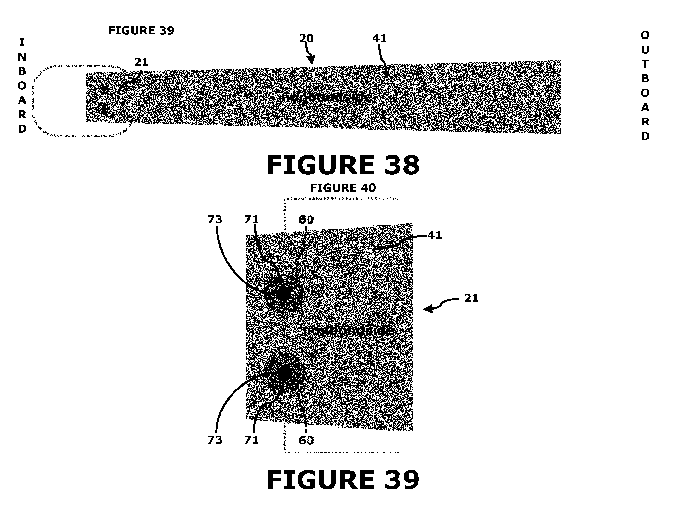

Another electrical mat 20 and inboard region 21 is shown in Figures 38-43. In this embodiment, the fastener heads 73 are situated nonbondside of the heater layer 43 and mounted on a bus connection face 53 with a patch of electrically conductive adhesive 76. The lead lines 30 can again be mechanically attached to the stem 71 via a nut 74 having internal threads 75.

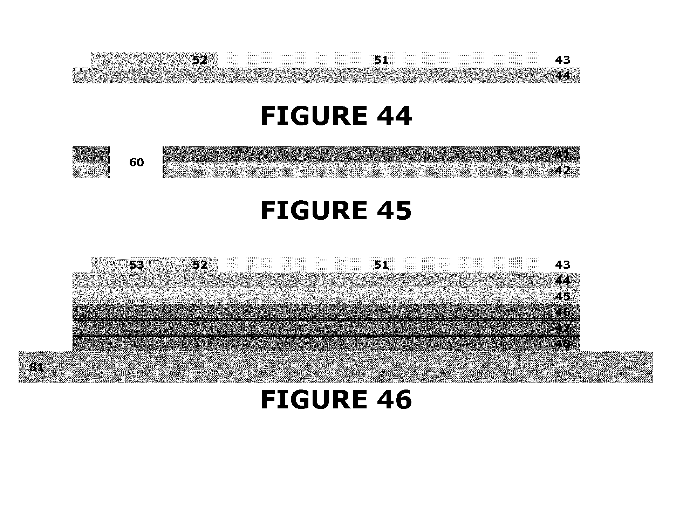

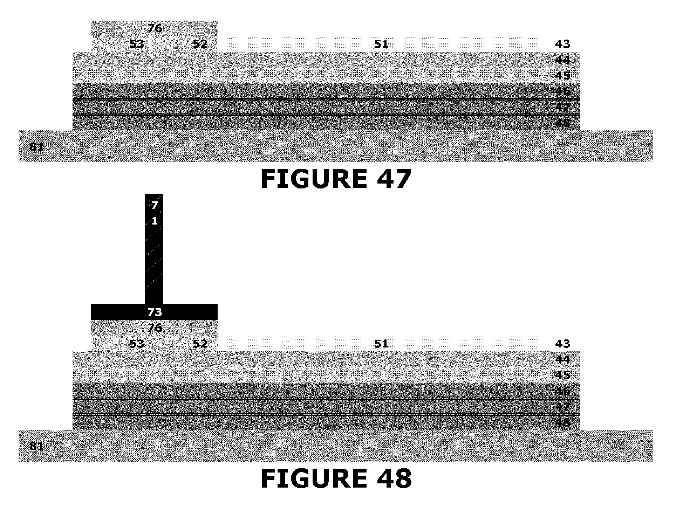

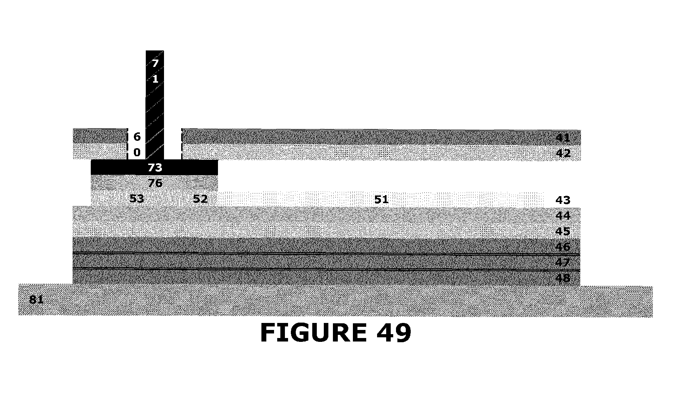

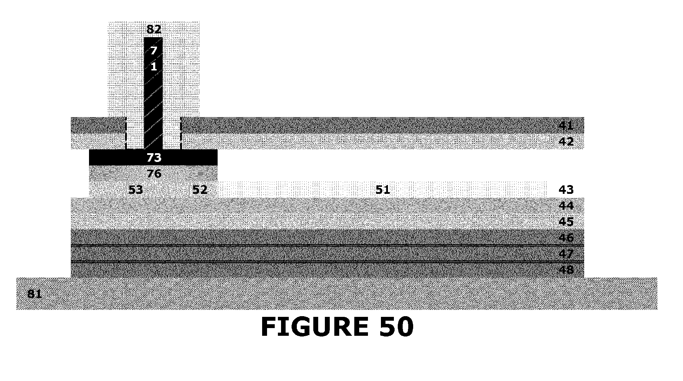

As shown in Figures 44-50, the mat 20 depicted in Figures 38-43 can be made in the same manner as discussed above, absent the opening-producing steps and with the addition of patch-applying step. Specifically, for example, the heater layer 43 can be subassembled on the support layer 44 (Figure 44) and the windows 60 can created on the layers 41-42 nonbondside of the heater layer 43 (Figure 45). The layers 43-48 are then compiled on the build metal 81 (Figure 46), the adhesive patches 76 are placed on the busses' connection faces 53 (Figure 47) and the fastener heads 73 are secured to the patches 76 (Figure 48). The layers 41-42 are then compiled with the layers 43-48, with the fastener stems 71 extending through windows 60 (Figure 49). A plug 82 is inserted into the window to preserve its dimensions (Figure 50) and then the laminate can then vacuum bagged and cured in a conventional manner.

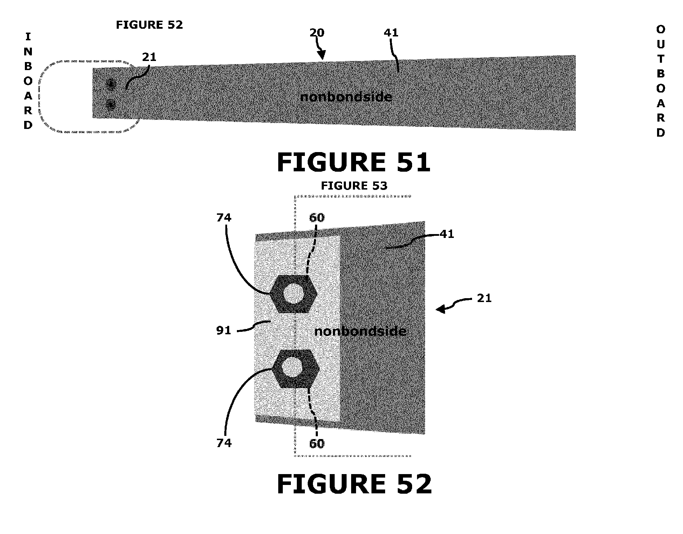

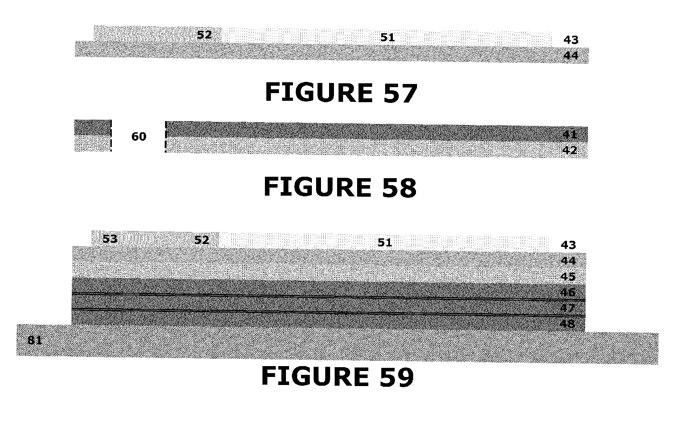

Another electrical mat 20 and inboard region 21 is shown in Figures 51-56. In this embodiment, the fastener nut 74 (with internal threads) is mounted on a bus connection face 53 with a patch of electrically conductive adhesive 76. The lead lines 30 can be mechanically attached to the nut 74 via a stem 72 having internal threads 73. As shown in Figures 57-64, the mat 20 can be made in the same manner as one discussed immediately above with the adhesively-attached head 73. However, additional laminate layers 91-93 may be necessary in the inboard region 21 to avoid over-protrusion of the nuts 74. And in this embodiment, a plug 84 can be positioned to preserve the nut's internal threads 75, rather than window dimensions.

With each of the connections shown in Figures 10-15, the connection face 36 of the lead line 30 contacts the bus's connection face 53 to thereby directly establish electrical connection therewith. The fastener stem 71 does not participate in the electrical connection path, but instead merely mechanically holds the lead line 30 so that its connection face 36 contacts the bus connection face 53. The fastener head 73 and the fastener's nut 94 also do not participate in the electrical connection path in these embodiments.

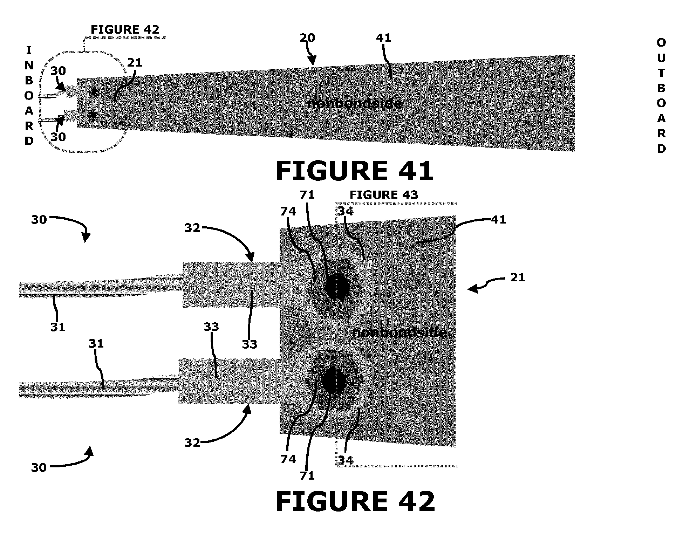

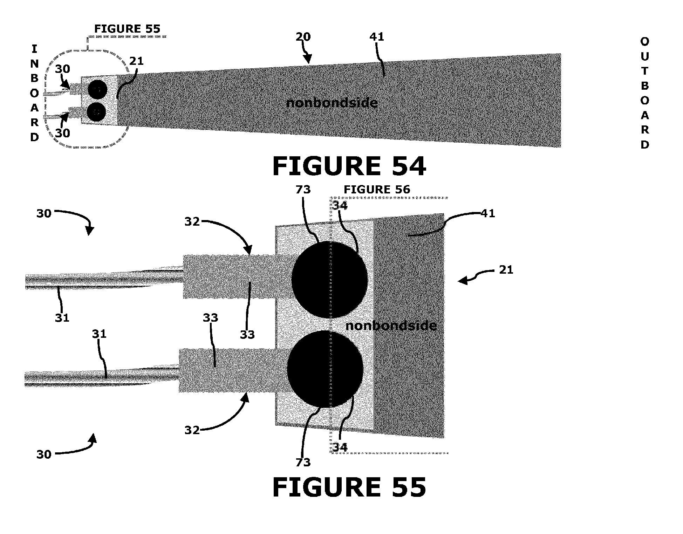

With the connections shown in Figures 41-43 and in Figures 54-56, the connection face 36 of the lead line 30 makes contact with the head 73 or the nut 74 of the fastener 70. Electrical connection with the bus's connection face 53 is made indirectly through the adhesive patch 76. The fastener stem 71 does not participate electrically in the electrical connection, but again merely mechanically holds the lead line 30 so that its connection face 36 contacts the bus connection face 53. In these embodiments, however, either the fastener head 73 or the fastener nut 74 participates electrically in the electrical connection of the lead line 30 to the bus 52.

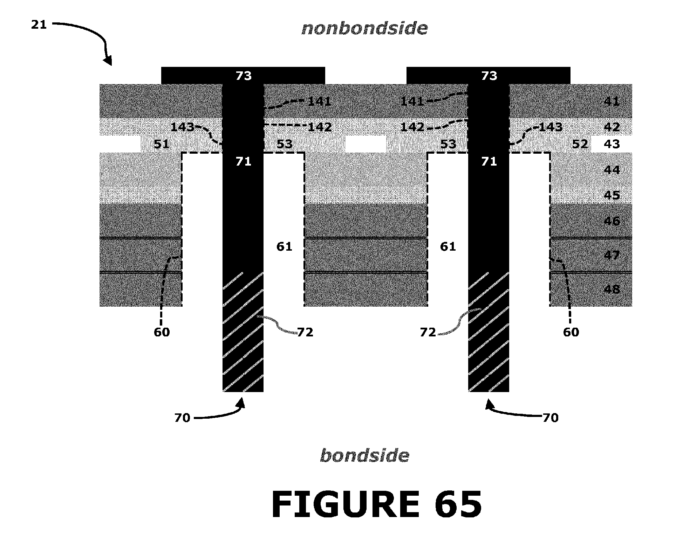

In the electrical mats 20 shown in Figures 4-9, Figure 40, and Figure 53, the electrical connections are made nonbondside. However, as shown in Figures 65-68, the electrical connections could instead be made bondside.

In the inboard regions 21 shown in the drawings, both fasteners 70 are positioned in the same manner for the two busses 52, but this need not be the case. An inboard region 21 having fasteners 70 positioned at different layer levels is feasible and foreseeable. Such a staggered positioning may be beneficial when the heater 50 has multiple conductive paths 51 (and thus multiple bus pairs). It may also help promote consistent thicknesses across the inboard region 21. And electrical mats 20 with both nonbondside and bondside electrical connections are certainly plausible and possible.

Accordingly, the aircraft electrical mat 20 allows the heater's busses 52 to be electrically connected to the lead lines 30 with simple and standard fastening tools. These electrical connections can be accomplished without heat application near the busses 52 and/or without post-lamination material removal steps.

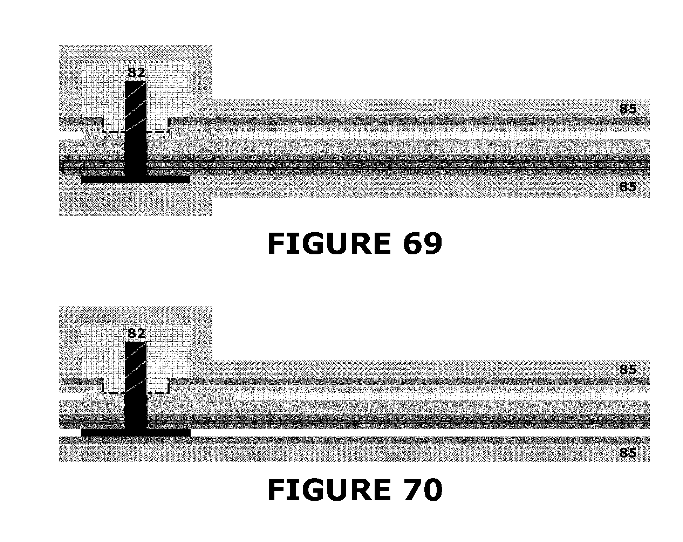

As shown in Figures 69-80, the aircraft electrical mat 10 can be delivered to the customer (e.g., an aircraft manufacturer), wrapped in instructional peel plies 85, with the dimension-preserving plug 82 still in the window 60, with the plug 83 still within the stem-receiving openings, and/or with the plug 84 still within the nuts 74.

While the aircraft 10, the electrical mat 20, the lead lines 30, the layers 41-48, the heater 50, the windows 60, and/or the fasteners 70 have been shown and described with respect to certain embodiments, other equivalent alterations and modifications will occur to others skilled in the art upon the reading and understanding of this disclosure. For example, while the electrical mats 20 are shown in connection with rotary helicopter blades 11, they can instead be installed on other rotary or non-rotary aircraft surfaces 12 susceptible to excessive ice accumulation. Furthermore, the electrical mat 20 may also find application in non-aircraft situations such as, for example, wind turbine blades.

Moreover, the mat 20 need not be for ice protection purposes, and/or the element 50 need not be a heater element. In an aircraft setting, for example, the electrical element 50 could be associated with lightning-strike protection with the lead lines 30 connected to ground. The element 50 can be any electrical element having a bus 52 for electrical connection to a lead line 30.

**REFERENCE NUMBERS**

| | | | |
|---|---|---|---|
| 10 | aircraft | 47 | bondside layer |
| 11 | aircraft components | 48 | bondside layer |
| 12 | ice-vulnerable surfaces | 50 | heater element |
| 13 | onboard power source | 51 | electrically conductive path |
| 20 | mat | 52 | bus |
| 21 | inboard region | 53 | connection face |
| 30 | lead lines | 60 | window |
| 31 | wire | 61 | stem-surrounding gap |
| 32 | ring terminal | 70 | fastener |
| 33 | crimp | 71 | stem |
| 34 | pedestal | 72 | external threads |
| 35 | ramp | 73 | head |
| 36 | bondside connection face | 74 | nut |
| 37 | nonbondside face | 75 | internal threads |
| 41 | nonbondside layer | 76 | electrically conductive adhesive |
| 42 | adhesive film layer | 81 | build metal |
| 43 | heater layer | 82 | window plug |
| 44 | heater-support layer | 83 | opening plug |
| 45 | adhesive film layer | 84 | nut plug |
| 46 | bondside layer | 85 | instructional peel plies |
| 91 | lofting layer | 143 | stem-receiving opening |
| 92 | lofting layer | 144 | stem-receiving opening |
| 93 | lofting layer | 145 | stem-receiving opening |
| 134 | stem-receiving opening | 146 | stem-receiving opening |
| 141 | stem-receiving opening | 147 | stem-receiving opening |
| 142 | stem-receiving opening | 148 | stem-receiving opening |

## Claims

1. An electrical mat (20) comprising a plurality of layers (41-48) including an electrical layer (43), an electrical element (50) on the layer (43) including at least one bus (52), a window (60) for each bus (52), and a fastener (70) for each window (60); wherein:
each bus (52) has a connection face (53) for electrical connection to a lead line (30),
each window (60) is aligned with the connection site (53) on the corresponding bus (52),
each fastener (70) has a threaded part (71, 74) that extends through the corresponding window (60), and
the threaded part (71, 74) is adapted to mechanically attach a terminal (32) of the lead line (30) so as to establish an electrical connection between a connection face (36) of the lead line (30) and the connection face (53) of the corresponding bus (52).

2. An electrical mat (20) as set forth in claim 1, wherein the electrical element (50) comprises at least one electrically conductive path (51) and a bus (52) is connected to each end of this path (51).

3. An electrical mat (20) as set forth in claim 2, wherein the electrical element (50) is a heater element and the conductive path (51) has a resistance corresponding to a desired heat output.

4. An electrical mat (20) as set forth in any preceding claim, wherein the window (60) reaches through the thickness of layers (41, 42) located nonbondside of the electrical layer (43).

5. An electrical mat (20) as set forth in any of claims 1 to 3, wherein the window (60) reaches through the thickness of layers (41, 42) located bondside of the electrical layer (43).

6. An electrical mat (20) as set forth in any preceding claim, wherein the fastener part is a stem (71) having external threads (72).

7. An electrical mat (20) as set forth in any preceding claim, wherein the fastener (70) comprises a head (73) attached to the stem (71), wherein the head (73) of each fastener (70) optionally has a thickness less than 1.0mm, less than 0.50mm, and/or less than 0.35mm.

8. An electrical mat (20) as set forth in claim 6 or 7, wherein each stem (71) extends through an opening (143) in the corresponding bus (52).

9. An electrical mat (20) as set forth in claim 8, wherein the connection face (53) for each bus (52) surrounds the opening (143).

10. An electrical mat (20) as set forth in claim 9, wherein the head (73) of each fastener (70) is mounted on the connection face (53) of the corresponding bus (52).

11. An electrical mat (20) as set forth in claim 10, wherein the head (73) is secured to the connection face (53) with electrically conductive adhesive (76).

12. An electrical mat (20) as set forth in any preceding claim, comprising a plug (82) in the window (60).

13. An electrical mat (20) as set forth in any preceding claim, further comprising:
a lead line (30) having a connection face (36) for each bus (52);
wherein the fastener part (71, 74) mechanically attaches the lead line (30) to thereby establish an electrical connection between the connection face (36) of the lead line (30) and the connection face (53) of the bus (52).

14. An aircraft (10) comprising:
an onboard power source (13);
an electrical mat (20) as set forth in any preceding claim; and
lead lines (30) electrically connecting the electrical element (50) of the electrical mat (20) to the onboard power source (13).

15. An aircraft (10) as set forth in claim 14, comprising a surface (12) and wherein the electrical mat (20) is installed on the surface (12), wherein, for example, the surface (12) is an ice-vulnerable surface and the electrical mat (20) is an ice protection mat.
